# EUROPÄISCHE PATENTSCHRIFT

(11) **EP 3 388 804 B1**
(45) Veröffentlichungstag und Bekanntmachung des Hinweises auf die Patenterteilung: **04.03.2020**
(21) Anmeldenummer: 17166643.1
(22) Anmeldetag: 13.04.2017
(51) Int. Cl.: G01K 7/22, G01K 15/00

(54) **MOTOR-FEEDBACK-SYSTEM**
MOTOR-FEEDBACK SYSTEM
SYSTÈME DE RÉTROACTION DE MOTEUR

(43) Veröffentlichungstag der Anmeldung: 17.10.2018
(73) Patentinhaber: SICK STEGMANN GmbH, 78166 Donaueschingen (DE)
(72) Erfinder: Marx, Thilo, 78052 Villingen-Schwenningen (DE); Lautemann, Andreas, 78199 Bräunlingen (DE); Takacs, Istvan, 78054 Villingen-Schwenningen (DE)
(74) Vertreter: Ludewigt, Christoph

(56) Entgegenhaltungen:
- EP-A1- 2 863 196
- EP-A1- 3 147 639
- WO-A2-2012/103356
- US-A1- 2008 181 280

## Beschreibung

Die Erfindung betrifft ein Motor-Feedback-System zum Regeln eines elektrischen Motors gemäß den Ansprüchen 1 und 6.

Von heutigen elektrischen Motoren, insbesondere sogenannten Servomotoren, werden immer mehr Leistungen abgerufen, so dass die Motoren vor Überhitzung geschützt werden müssen. Um einen Überhitzungsschutz bei gleichzeitiger hoher Dynamik des Motors zu gewährleisten, wird der Motor durch ein Motor-Feedback-System überwacht und geregelt. Das Motor-Feedback-System weist für die Regelung des Motors zumindest einen Encoder bzw. einen Drehgeber auf, der an dem Motor montiert ist und eine Winkelposition einer Motorwelle des Motors erfasst, so dass mittels der erfassten Winkelposition und einer vorgegebenen Sollposition eine Drehgeschwindigkeit und/oder eine Beschleunigung des Motors geregelt werden kann.

Zur Überwachung des Motors ist im Motor ein Sensor, im Folgenden auch als Motor-Temperatursensor bezeichnet, vorgesehen, der eine Temperatur des Motors erfasst und an dem Encoder des Motor-Feedback-Systems kommuniziert. Hierbei misst der Motor-Temperatursensor einen temperaturabhängigen Widerstandswert, aus dem ein Temperaturwert für den Motor mittels eines Motorreglers bestimmbar ist.

Für die Bestimmung des Temperaturwertes des Motors berechnet das Motor-Feedback-System bzw. der Motorregler anhand einer Widerstands-Temperatur-Kennlinie des Motor-Temperatursensors aus dem gemessenen Widerstandswert den entsprechenden Temperaturwert, so dass der im Motor eingebaute Motor-Temperatursensor bzw. ein im Motor verwendeter Sensortyp und insbesondere dessen Widerstands-Temperatur-Kennlinie dem Motor-Feedback-System unbedingt bekannt sein muss.

Bei einem Wechsel des Motor-Temperatursensors bzw. des Sensortyps im Motor kann das heutige Motor-Feedback-System nicht auf den geänderten Motor-Temperatursensor bzw. Sensortyp reagieren, so dass anhand einer nicht dem geänderten Sensortyp entsprechenden Widerstands-Temperatur-Kennlinie ein falscher Temperaturwert zu dem gemessenen Widerstandswert des geänderten Motor-Temperatursensors bzw. Sensortyps ausgegeben wird.

Alternativ kann das Motor-Feedback-System manuell auf den Wechsel des Motor-Temperatursensors bzw. des Sensortyps eingestellt werden, wobei die manuelle Einstellung des Motor-Feedback-Systems zeit- und kostenaufwändig ist.

Aus EP 2 863 196 A1 ist eine selbstkalibrierende Temperatursteuervorrichtung bzw. ein Temperatursteuerverfahren für ein geregeltes Heizelement bekannt. Hierbei weist die Temperatursteuervorrichtung eine Temperatur-Rückkopplungs- und Steuereinheit auf, die einen Temperaturwert einer Temperaturmesseinheit erhält, um eine endgültige stabile Temperatur des Heizelements zu steuern.

EP 3 147 639 A1 offenbart einen Temperaturkonverter für eine elektrische Maschine, der über eine Eingangsschnittstelle mit einem Temperatursensor der Maschine und über eine Ausgangsschnittstelle mit einer Auswerteeinrichtung einer Maschine-Regelungseinheit verbunden ist. Hierbei simuliert der Temperaturkonverter anhand eines von einem Temperatursensor der Maschine gemessenen Temperatureingangssignals einen Widerstandswert, der eine Temperatur entsprechend eines zweiten TemperatursensorTyps des Temperaturkonverters entspricht. Der gemessene Temperaturwert und der simulierte Temperaturwert werden der Maschine-Regelungseinheit zur Verfügung gestellt, so dass die Maschine-Regelungseinheit anhand der gemessenen und simulierten Temperaturwerte genau und sicher regeln kann.

Es ist eine Aufgabe der Erfindung, ein Motor-Feedback-System zum Steuern eines elektrischen Motors derart zu verbessern, dass das Motor-Feedback-System eine in Abhängigkeit eines Temperatursensortyps erfasste Temperatur des Motors auf einfachste und kostengünstigste Weise korrekt erfasst.

Die Aufgabe wird erfindungsgemäß gelöst durch ein Motor-Feedback-System zum Regeln eines elektrischen Motors, der einen Motor-Temperatursensor eines spezifischen Sensortyps aufweist zum Erfassen eines ersten Widerstandswertes, der gemäß einer Widerstands-Temperatur-Kennlinie des spezifischen Sensortyps einem Motor-Temperaturwert entspricht, wobei das Motor-Feedback-System einen Encoder umfasst, der eine Rotation einer Motorwelle des Motors erfasst und eine programmierbare Speichereinheit mit einem abgespeicherten Verarbeitungsprogramm aufweist zum Verarbeiten des ersten Widerstandswertes, wobei das Verarbeitungsprogramm aus dem ersten Widerstandswert gemäß einer Zuordnungsvorschrift einen Ausgangs-Widerstandswert bestimmt, so dass der Ausgangs-Widerstandswert gemäß einer Widerstands-Temperatur-Kennlinie eines standardisierten Sensortyps dem Motor-Temperaturwert entspricht, und wobei der Ausgang-Widerstandswert an einen Motorregler kommunizierbar ist zur temperaturabhängigen Regelung des Motors.

Hieraus ergibt sich der Vorteil, dass bei einem Wechsel des Motor-Temperatursensors das erfindungsgemäße Motor-Feedback-System dank des Verarbeitungsprogramms in der Lage ist, den Sensortyp des neuen Motor-Temperatursensors zu erkennen und somit die Widerstandswerte des neuen Motor-Temperatursensors entsprechend korrekt zu erkennen und zu verarbeiten, so dass der Motorregler den richtigen Motor-Temperaturwert bestimmen und den Motor korrekt regeln kann.

Gemäß einem bevorzugten Ausführungsbeispiel umfasst die Zuordnungsvorschrift einen Vergleich des ersten Widerstandswertes mit in der Speichereinheit abgespeicherten Widerstandswerten zumindest einer Look-up Tabelle oder eine Umrechnung des ersten Widerstandswertes mittels eines entsprechenden Polynoms. Weiterhin teilt vorteilhafterweise die Zuordnungsvorschrift dem Verarbeitungsprogramm den spezifischen Sensortyp des Motor-Temperatursensors mit und bestimmt anhand eines Vergleichs zwischen der Widerstands-Temperatur-Kennlinie des spezifischen Sensortyps und der Widerstands-Temperatur-Kennlinie des standardisierten Sensortyps in Abhängigkeit vom ersten Widerstandswert den Ausgangs-Widerstandswert.

Solch eine Zuordnungsvorschrift hat den Vorteil, dass das Verarbeitungsprogramm des Encoders des Motor-Feedback-Systems ganz einfach auf einen Motor- bzw. Sensorwechsel angepasst werden kann, wodurch das Motor-Feedback-System völlig unterschiedliche Motoren mit unterschiedlichen Motor-Temperatursensoren erkennen und verarbeiten kann. Der Motorregler erhält immer den richtigen Widerstandswert zu dem entsprechend Motor-Temperaturwert, um den Motor optimal zu regeln.

Ferner gemäß einem weiteren bevorzugten Ausführungsbeispiel ist die Zuordnungsvorschrift manuell oder automatisch in das Verarbeitungsprogramm eingebbar. Eine Inbetriebnahme des Motor-Feedback-Systems mit einem neuen Motor bzw. Motor mit neuem Motor-Temperatursensor ist einfach und zeitsparend möglich.

Die Aufgabe wird weiterhin erfindungsgemäß gelöst durch ein Motor-Feedback-System zum Regeln eines elektrischen Motors, der einen Motor-Temperatursensor eines spezifischen Sensortyps aufweist zum Erfassen eines ersten Widerstandswertes, der gemäß einer Widerstands-Temperatur-Kennlinie des spezifischen Sensortyps einem Motor-Temperaturwert entspricht, wobei das Motor-Feedback-System einen Encoder umfasst, der eine Rotation einer Motorwelle des Motors erfasst und eine programmierbare Speichereinheit mit einem abgespeicherten Verarbeitungsprogramm aufweist zum Verarbeiten des ersten Widerstandswertes, wobei in der Speichereinheit Widerstands-Temperatur-Kennlinien verschiedener Sensortypen abgespeichert sind und wobei diejenige Widerstands-Temperatur-Kennlinie, die dem spezifischen Sensortyp entspricht, automatisch ermittelt wird, wobei das Verarbeitungsprogramm aus dem ersten Widerstandswert einen Ausgangs-Widerstandswert über eine Widerstands-Temperatur-Kennlinie eines standardisierten Sensortyps bestimmt, so dass der Ausgangs-Widerstandswert dem Motor-Temperaturwert entspricht, und wobei der Ausgang-Widerstandswert an einen Motorregler kommunizierbar ist zur temperaturabhängigen Regelung des Motors.

Dies ergibt den Vorteil, dass keine Grenzen bei einer Anzahl an unterstützten Motor-Temperatursensoren bzw. Sensortypen gesetzt sind, so dass lediglich abhängig von einer Größe der programmierbaren Speichereinheit eine Vielzahl an Widerstands-Temperatur-Kennlinien in dem Verarbeitungsprogramm implementierbar sind.

Gemäß einem bevorzugten Ausführungsbeispiel weist der Encoder einen integrierten Encoder-Temperatursensor auf, der einen einen Encoder-Temperaturwert repräsentierenden zweiten Widerstandswert entsprechend einer Widerstands-Temperatur-Kennlinie des Encoder-Temperatursensors erzeugt. Vorteilhafterweise bestimmt bei einem Starten des Motor-Feedback-Systems und des Motors das Verarbeitungsprogramm aus den abgespeicherten Widerstands-Temperatur-Kennlinien die Widerstands-Temperatur-Kennlinie des spezifischen Sensortyps, die den ersten Widerstandswert bei dem Encoder-Temperaturwert eindeutig aufweist.

Hierdurch ergibt sich der Vorteil, dass trotz eines Wechsels des Motor-Temperatursensors des Motors oder Unkenntnisse bzgl. des im Motor verwendeten Motor-Temperatursensors eine automatische Bestimmung des Sensortyps des Motor-Temperatursensors und damit eine genaue Erfassung der Motortemperatur einfach erzielbar ist.

Mit anderen Worten, das Verarbeitungsprogramm ist in der Lage, durch den Vergleich des gemessenen ersten Widerstandswertes des Motor-Temperatursensors im Motor mit dem zweiten Widerstandswert des eigenen Encoder-Temperatursensors des Motor-Feedback-Systems und hinterlegten Widerstands-Temperatur-Kennlinien unterschiedlicher Sensoren auf den richtigen Sensortyp des Motor-Temperatursensors zu schließen und einen Ausgang-Widerstandswert gleich zu dem gemessenen ersten Widerstandswert zu errechnen.

Gemäß einem weiteren bevorzugten Ausführungsbeispiel umfassen der Motor-Temperatursensor und der Encoder-Temperatursensor einen Widerstand-Temperatursensor, insbesondere einen Heißleiter-Fühler bzw. Thermistor oder einen Kaltleiter-Fühler bzw. Platinsensor.

Weiterhin ist gemäß einem bevorzugten Ausführungsbeispiel der erste Widerstandswert des Motor-Temperatursensors als Eingangsparameter im Verarbeitungsprogramm definiert und hinterlegt.

Zusätzlich umfasst vorteilhafterweise die Speichereinheit einen flüchtigen oder nichtflüchtigen Datenspeicher.

Das erfindungsgemäße Motor-Feedback-System kann auf ähnliche Weise durch weitere Merkmale ausgestaltet werden und zeigt dabei ähnliche Vorteile. Derartige weitere Merkmale sind beispielhaft, aber nicht abschließend, in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figur der Zeichnung zeigt in:
- Fig. 1: eine schematische Darstellung eines bevorzugten Ausführungsbeispiels eines erfindungsgemäßen Motor-Feedback-Systems,
- Fig. 2: ein beispielhaftes Widerstands-Temperatur-Diagramm, in dem eine spezifische und standardisierte Widerstands-Temperatur-Kennlinie dargestellt ist, und
- Fig. 3: ein weiteres beispielhaftes Widerstands-Temperatur-Diagramm, in dem eine Mehrzahl von Widerstands-Temperatur-Kennlinien dargestellt ist.

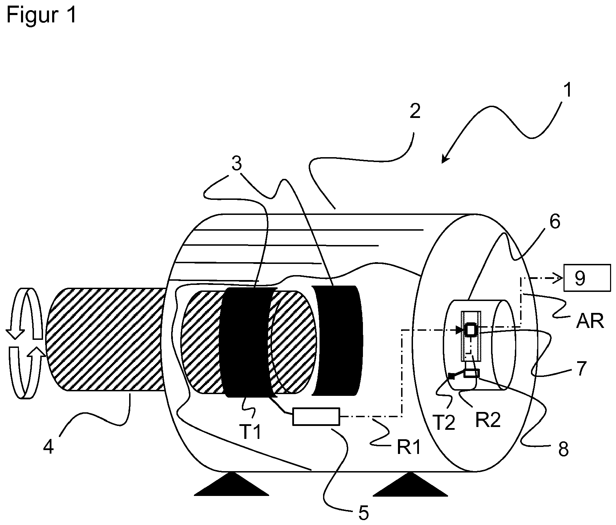

In der Figur 1 ist eine schematische Darstellung eines bevorzugten Ausführungsbeispiels eines erfindungsgemäßen Motor-Feedback-Systems 1 zum Steuern eines elektrischen Motors 2 gezeigt.

Der elektrische Motor 2 weist Wicklungen 3 auf, die eine Motorwelle 4 des Motors 2 antreiben. Zusätzlich umfasst der elektrische Motor 2 einen Motor-Temperatursensor 5 eines spezifischen Sensortyps Typ-I, der einen ersten Widerstandswert R1 erfasst, wobei der erste Widerstandswert R1 von einer Temperatur des Motors 2 abhängt und gemäß einer Widerstands-Temperatur-Kennlinie K1, im Folgenden noch beschrieben, des spezifischen Sensortyps Typ-I eines Motor-Temperaturwertes T1 entspricht.

Das erfindungsgemäße Motor-Feedback-Motor 1 umfasst einen Encoder 6, der eine Rotation der Motorwelle 4 des Motors 2 erfasst. Der Encoder 6 ist an dem Motor 2 angeordnet und elektrisch mit dem Motor 2 verbunden.

Erfindungsgemäß weist der Encoder 6 eine programmierbare Speichereinheit 7 mit einem abgespeicherten Verarbeitungsprogramm auf, das den ersten Widerstandswert des Motor-Temperatursensors 5 empfängt. Die Speichereinheit 7 umfasst insbesondere einen flüchtigen oder nichtflüchtigen Datenspeicher. Das abgespeicherte Verarbeitungsprogramm ist zum Verarbeiten des ersten Widerstandswertes R1 ausgelegt, wobei der erste Widerstandswert R1 vorzugsweise als ein Eingangsparameter des Encoders 6 im Verarbeitungsprogramm definiert und hinterlegt ist.

Wie im Ausführungsbeispiel dargestellt, weist der Encoder 6 einen integrierten Encoder-Temperatursensor 8 auf, der einen einen Encoder-Temperaturwert T2 repräsentierenden zweiten Widerstandswert R2 entsprechend einer Widerstands-Temperatur-Kennlinie K2, im Folgenden noch beschrieben, des Encoder-Temperatursensors 8 erzeugt.

Das Verarbeitungsprogramm des Encoders 6 bestimmt anhand des ersten Widerstandswertes R1 einen Ausgangs-Widerstandswert AR, so dass der Ausgangs-Widerstandswert AR der Motortemperatur bzw. des Motor-Temperaturwertes T1 entspricht. Der Ausgangs-Widerstandswert AR ist durch das Verarbeitungsprogramm an einen Motorregler 9 kommunizierbar, der auf Basis des Ausgangs-Widerstandswertes AR eine temperaturabhängige Regelung des Motors 2 durchführt.

Gemäß einer ersten Alternativen des erfindungsgemäßen Motor-Feedback-Systems 1 ist in dem Verarbeitungsprogramm des Encoders 6 eine Zuordnungsvorschrift hinterlegt, gemäß der Zuordnungsvorschrift das Verarbeitungsprogramm aus dem ersten Widerstandswert R1 den Ausgangs-Widerstandswert AR bestimmt, so dass der Ausgangs-Widerstandswert AR gemäß einer Widerstands-Temperatur-Kennlinie KE, im Folgenden noch beschrieben, eines standardisierten Sensortyps Typ-E, im Folgenden noch beschrieben, des Motor-Temperaturwertes T1 entspricht.

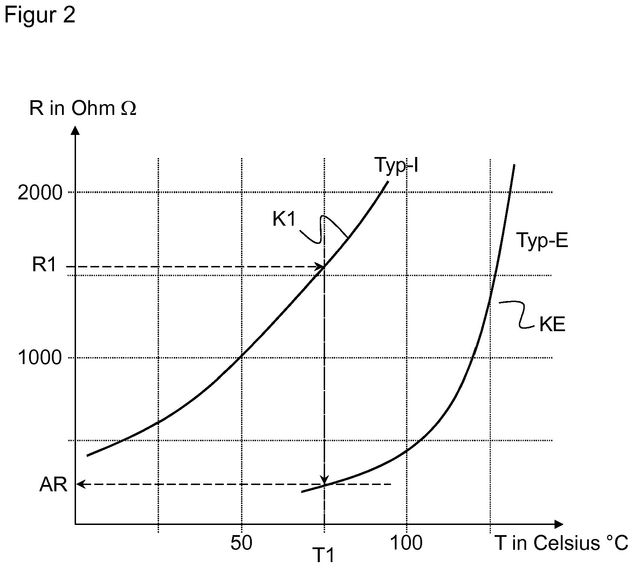

Anhand der Figur 2 wird die erste Alternative des erfindungsgemäßen Motor-Feedback-Systems 1 näher erläutert. Die Figur 2 zeigt ein beispielhaftes Widerstands-Temperatur-Diagramm R-T, in dem die spezifische Widerstands-Temperatur-Kennlinie K1 des spezifischen Sensortyps Typ-I des Motor-Temperatursensors 5 und die standardisierte Widerstands-Temperatur-Kennlinie KE des standardisierten Sensortyps Typ-E dargestellt sind.

Vorzugsweise teilt die Zuordnungsvorschrift dem Verarbeitungsprogramm den spezifischen Sensortyp Typ-I des Motor-Temperatursensors 5 mit. Das Verarbeitungsprogramm erhält den ersten Widerstandswert R1 des Motor-Temperatursensors 5 und bestimmt anhand eines Vergleichs der Widerstands-Temperatur-Kennlinie K1 des spezifischen Sensortyps Typ-I mit der Widerstands-Temperatur-Kennlinie KE des standardisierten Sensortyps Typ-E in Abhängigkeit vom ersten Widerstandswert R1 den Ausgangs-Widerstandswert AR, wobei der Ausgangs-Widerstandswert AR aus der Widerstands-Temperatur-Kennlinie KE des standardisierten Sensortyps Typ-E die Motortemperatur bzw. den Motor-Temperaturwert T1 wiedergibt.

Die Zuordnungsvorschrift kann auch einen Vergleich des ersten Widerstandswertes R1 mit in der Speichereinheit 7 abgespeicherten Widerstandswerten zumindest einer Look-up Tabelle umfassen, so dass ein Widerstandswert, der entsprechend des standardisierten Sensortyps Typ-E die Motortemperatur bzw. den Motor-Temperaturwert T1 wiedergibt, aus der Look-up Tabelle den ersten Widerstandswert R1 zugeordnet wird und dieser Widerstandswert als Ausgangs-Widerstandswert AR ausgegeben wird.

Es ist ebenfalls möglich, dass die Zuordnungsvorschrift eine Umrechnung des ersten Widerstandswertes R1 in den Ausgangs-Widerstandswert AR mittels eines entsprechenden Polynoms umfasst. Das heißt, das Verarbeitungsprogramm erhält den ersten Widerstandswert R1 des spezifischen Sensortyps Typ-I des Motor-Temperatursensors 5 und kann durch das entsprechende Polynom der Zuordnungsvorschrift den ersten Widerstandswert R1 auf einen Widerstandswert, der die Motortemperatur bzw. den Motor-Temperaturwert T1 wiedergibt, entsprechend dem standardisierten Sensortyp Typ-E umrechnen und den umgerechneten Widerstandswert als Ausgangs-Widerstandswert AR an den Motorregler 9 kommunizieren.

Ferner kann die Zuordnungsvorschrift manuell oder automatisch in das Verarbeitungsprogramm eingegeben werden. Hierbei bedeutet manuell, dass beim Anschließen des erfindungsgemäßen Motor-Feedback-Systems 1 an dem Motor 2, ein Bediener den spezifischen Sensortyp Typ-I des Motor-Temperatursensors 5 in das Verarbeitungsprogramm des Encoders 6 eingibt, so dass die entsprechende Zuordnungsvorschrift zur Bestimmung des Ausgangs-Widerstandswertes AR aus dem ersten Widerstandswert R1 aktiviert werden kann.

Auf der anderen Seite kann durch Anschließen des erfindungsgemäßen Motor-Feedback-Systems 1 an dem Motor 2 ein Signal vom Motortemperatorsensor 5 automatisch dem Verarbeitungsprogramm des Encoders 6 übermittelt werden, wobei das Signal in dem Verarbeitungsprogramm die entsprechende Zuordnungsvorschrift aktiviert.

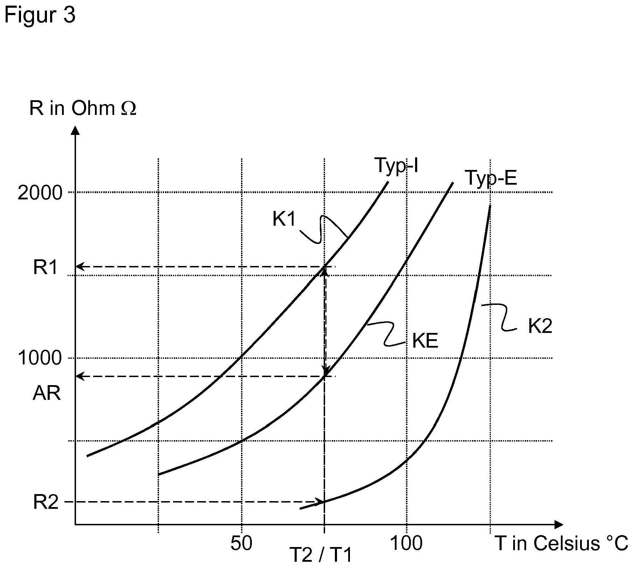

Gemäß der zweiten Alternativen des erfindungsgemäßen Motor-Feedback-Systems 1, wie nachfolgend in der Figur 3 beschrieben, sind in der Speichereinheit 7 Widerstands-Temperatur-Kennlinien K1, K2, und KE verschiedener Sensortypen Typ-I und Typ-E abgespeichert, so dass das Verarbeitungsprogramm diejenige Widerstands-Temperatur-Kennlinie K1, die dem spezifischen Sensortyp Typ-I entspricht, automatisch ermittelt.

Hierbei bestimmt das Verarbeitungsprogramm aus dem ersten Widerstandswert R1 den Ausgangs-Widerstandswert AR über eine Widerstands-Temperatur-Kennlinie KE eines standardisierten Sensortyps Typ-E, so dass der Ausgangs-Widerstandswert AR dem Motor-Temperaturwert T1 entspricht.

Mit anderen Worten, dem Verarbeitungsprogramm des Encoders 6 ist der spezifische Sensortyp Typ-I des Motor-Temperatursensors 5 nicht bekannt. Das Verarbeitungsprogramm erhält den ersten Widerstandswert R1 und bestimmt automatisch durch Vergleiche zwischen den verschiedenen abgespeicherten Widerstands-Temperatur-Kennlinien K1, K2 und KE die Widerstands-Temperatur-Kennlinie K1, die dem spezifischen Sensortyp Typ-I entspricht.

Insbesondere liegt dem Encoder 6 - wie in der Figur 3 in Form eines weiteren beispielhaften Widerstands-Temperatur-Diagramms, in dem eine Mehrzahl von Widerstands-Temperatur-Kennlinien K1, K2 und KE dargestellt sind - der zweite Widerstandswert R2 des eigenen integrierten Encoder-Temperatursensors 8 aus der entsprechenden Widerstands-Temperatur-Kennlinie K2 des Encoder-Temperatursensors 8 und bei dem Encoder-Temperaturwert T2 vor.

Das Verarbeitungsprogramm vergleicht den ersten Widerstandswert R1, den es als Eingangsparameter erhält, mit den verschiedenen abgespeicherten Widerstands-Temperatur-Kennlinien K1 und KE und bestimmt die Widerstands-Temperatur-Kennlinie K1 als diejenige des spezifischen Sensortyps Typ-I des Motor-Temperatursensors 5, die den ersten Widerstandswert R1 bei dem ausgegangenen Encoder-Temperaturwert T2 eindeutig aufweist. Eindeutig bedeutet in diesem Zusammenhang, dass bei dem Encoder-Temperaturwert T2 der erste Widerstandswert R1 nur exakt eine Widerstands-Temperatur-Kennlinie zugeordnet ist. Im Falle, dass mehr als eine Widerstands-Temperatur-Kennlinie den ersten Widerstandswert R1 bei dem Encoder-Temperaturwert T2 enthält, muss die Bestimmung iterativ, das heißt beim nächsten Encoder-Temperaturwert, fortgesetzt werden, bis nur noch eine Widerstands-Temperatur-Kennlinie überbleibt, die die obige Bedingung erfüllt.

Hieraufhin bestimmt das Verarbeitungsprogramm aus dem ersten Widerstandswert R1 entsprechend der bestimmten Widerstands-Temperatur-Kennlinie K1 des spezifischen Sensortyps Typ-I den Ausgangs-Widerstandswert R2 über die Widerstands-Temperatur-Kennlinie KE des standardisierten Sensortyps Typ-E, so dass der Ausgangs-Widerstandswert AR die Motortemperatur bzw. den Motor-Temperaturwert T1 exakt wiedergibt und an den Motorregler 9 kommuniziert wird, der den Ausgangs-Widerstandswert AR entsprechend des standardisierten Sensortyps Typ-E verarbeiten kann und den Motor 2 temperaturabhängig korrekt regelt.

Vorzugsweise bestimmt das Verarbeitungsprogramm die Widerstands-Temperatur-Kennlinie K1 des spezifischen Sensortyps Typ-E aus den abgespeicherten Widerstands-Temperatur-Kennlinien bei einem Starten des Motor-Feedback-Systems 1 und des Motors 2, da der Motor-Temperaturwert T1 und der Encoder-Temperaturwert T2 annähernd identisch sind und ein Temperaturunterschied zwischen dem Encoder 6 und dem Motor 2 noch keinen entscheidenden Einfluss hat.

Ferner umfassen der Motor-Temperatursensor 5 und der Encoder-Temperatursensor 8 einen Widerstand-Temperatursensor, insbesondere einen Heißleiter-Fühler bzw. Thermistor oder einen Kaltleiter-Fühler bzw. Platinsensor, dessen Widerstands-Temperatur-Kennlinie K1, K2 und KE ausreichend bekannt ist.

### Bezugszeichenliste

- 1: Motor-Feedback-System
- 2: Motor
- 3: Windungen
- 4: Motorwelle
- 5: Motor-Temperatursensor
- 6: Encoder
- 7: Speichereinheit
- 8: Encoder-Temperatursensor
- 9: Motorregler

- K1: Temperatur-Widerstandswert-Kennlinie des spezifischen Sensortyps
- K2: Temperatur-Widerstandswert-Kennlinie des Encoder-Temperatursensors
- KE: Temperatur-Widerstandswert-Kennlinie des standardisierten Sensortyps
- R1: Erster Widerstandswert
- R2: Zweiter Widerstandswert
- AR: Ausgangs-Widerstandswert
- T1: Motor-Temperaturwert
- T2: Encoder-Temperaturwert
- Typ-I: Spezifischer Sensortyp
- Typ-E: Standardisierter Sensortyp

## Patentansprüche

1. Motor-Feedback-System (1) zum Regeln eines elektrischen Motors (2), der einen Motor-Temperatursensor (5) eines spezifischen Sensortyps (Typ-I) aufweist zum Erfassen eines ersten Widerstandswertes (R1), der gemäß einer Widerstands-Temperatur-Kennlinie (K1) des spezifischen Sensortyps (Typ-I) einem Motor-Temperaturwert (T1) entspricht,
- wobei das Motor-Feedback-System (1) einen Encoder (6) und einen Motorregler (9) umfasst, wobei der Encoder (6) eine Rotation einer Motorwelle (4) des Motors (2) erfasst,
**dadurch gekennzeichnet, dass** der Encoder (6) eine programmierbare Speichereinheit (7) mit einem abgespeicherten Verarbeitungsprogramm aufweist zum Verarbeiten des ersten Widerstandswertes (R1),
- wobei das Verarbeitungsprogramm aus dem ersten Widerstandswert (R1) gemäß einer Zuordnungsvorschrift einen Ausgangs-Widerstandswert (AR) bestimmt, so dass der Ausgangs-Widerstandswert (AR) gemäß einer Widerstands-Temperatur-Kennlinie (KE) eines standardisierten Sensortyps (Typ-E) dem Motor-Temperaturwert (T1) entspricht,
- und wobei der Ausgang-Widerstandswert (AR) an den Motorregler (9) kommunizierbar ist zur temperaturabhängigen Regelung des Motors (2).

2. Motor-Feedback-System (1) nach Anspruch 1, **dadurch gekennzeichnet, dass** die Zuordnungsvorschrift einen Vergleich des ersten Widerstandswertes (R1) mit in der Speichereinheit (7) abgespeicherten Widerstandswerten zumindest einer Look-up Tabelle umfasst.

3. Motor-Feedback-System (1) nach Anspruch 1, **dadurch gekennzeichnet, dass** die Zuordnungsvorschrift eine Umrechnung des ersten Widerstandswertes (R1) mittels eines entsprechenden Polynoms umfasst.

4. Motor-Feedback-System (1) nach Anspruch 1, **dadurch gekennzeichnet, dass** die Zuordnungsvorschrift dem Verarbeitungsprogramm den spezifischen Sensortyp (Typ-I) des Motor-Temperatursensors (5) mitteilt und anhand eines Vergleichs zwischen der Widerstands-Temperatur-Kennlinie (K1) des spezifischen Sensortyps (Typ-I) und der Widerstands-Temperatur-Kennlinie (KE) des standardisierten Sensortyps (Typ-E) in Abhängigkeit vom ersten Widerstandswert (R1) den Ausgangs-Widerstandswert (AR) bestimmt.

5. Motor-Feedback-System (1) nach einem der vorhergehenden Ansprüche 1 bis 4, **dadurch gekennzeichnet, dass** die Zuordnungsvorschrift manuell oder automatisch in das Verarbeitungsprogramm eingebbar ist.

6. Motor-Feedback-System (1) zum Regeln eines elektrischen Motors (2), der einen Motor-Temperatursensor (5) eines spezifischen Sensortyps (Typ-I) aufweist zum Erfassen eines ersten Widerstandswertes (R1), der gemäß einer Widerstands-Temperatur-Kennlinie (K1) des spezifischen Sensortyps (Typ-I) einem Motor-Temperaturwert (T1) entspricht,
- wobei das Motor-Feedback-System (1) einen Encoder (6) und einen Motorregler (9) umfasst, wobei der Encoder (6) eine Rotation einer Motorwelle (4) des Motors (2) erfasst,
**dadurch gekennzeichnet, dass** der Encoder (6) eine programmierbare Speichereinheit (7) mit einem abgespeicherten Verarbeitungsprogramm aufweist zum Verarbeiten des ersten Widerstandswertes (R1),
- wobei in der Speichereinheit (7) Widerstands-Temperatur-Kennlinien (K1, K2, KE) verschiedener Sensortypen (Typ-I, Typ-E) abgespeichert sind und
- wobei diejenige Widerstands-Temperatur-Kennlinie (K1), die dem spezifischen Sensortyp (Typ-I) entspricht, automatisch ermittelt wird,
- wobei das Verarbeitungsprogramm aus dem ersten Widerstandswert (R1) einen Ausgangs-Widerstandswert (AR) über eine Widerstands-Temperatur-Kennlinie (KE) eines standardisierten Sensortyps (Typ-E) bestimmt, so dass der Ausgangs-Widerstandswert (AR) dem Motor-Temperaturwert (T1) entspricht,
- und wobei der Ausgang-Widerstandswert (AR) an den Motorregler (9) kommunizierbar ist zur temperaturabhängigen Regelung des Motors (2).

7. Motor-Feedback-System (1) nach Anspruch 6, **dadurch gekennzeichnet, dass** der Encoder (6) einen integrierten Encoder-Temperatursensor (8) aufweist, der einen einen Encoder-Temperaturwert (T2) repräsentierenden zweiten Widerstandswert (R2) entsprechend einer Widerstands-Temperatur-Kennlinie (K2) des Encoder-Temperatursensors (8) erzeugt.

8. Motor-Feedback-System (1) nach Anspruch 7, **dadurch gekennzeichnet, dass** bei einem Starten des Motor-Feedback-Systems (1) und des Motors (2) das Verarbeitungsprogramm aus den abgespeicherten Widerstands-Temperatur-Kennlinien (K1, KE) die Widerstands-Temperatur-Kennlinie (K1) des spezifischen Sensortyps (Typ-I) bestimmt, die den ersten Widerstandswert (R1) bei dem Encoder-Temperaturwert (T2) eindeutig aufweist.

9. Motor-Feedback-System (1) nach zumindest einem der vorhergehenden Ansprüche 1 bis 8, **dadurch gekennzeichnet, dass** der Motor-Temperatursensor (5) und der Encoder-Temperatursensor (8) einen Widerstands-Temperatursensor, insbesondere einen Heißleiter-Fühler bzw. Thermistor oder einen Kaltleiter-Fühler bzw. Platinsensor, umfassen.

10. Motor-Feedback-System (1) nach einem der vorhergehenden Ansprüche 1 bis 9, **dadurch gekennzeichnet, dass** der erste Widerstandswert (R1) des Motor-Temperatursensors (5) als Eingangsparameter im Verarbeitungsprogramm definiert und hinterlegt ist.

11. Motor-Feedback-System (1) nach zumindest einem der vorhergehenden Ansprüche 1 bis 10, **dadurch gekennzeichnet, dass** die Speichereinheit (7) einen flüchtigen oder nichtflüchtigen Datenspeicher umfasst.

## Claims

1. A motor feedback system (1) for controlling an electric motor (2), comprising a motor temperature sensor (5) of a specific sensor type (Type-I) for detecting a first resistance value (R1) corresponding to a motor temperature value (T1) according to a resistance-temperature characteristic (K1) of the specific sensor type (Type-I),
- wherein the motor feedback system (1) comprises an encoder (6) and a motor controller (9), the encoder (6) detecting a rotation of a motor shaft (4) of the motor (2),
**characterized in that** the encoder (6) comprises a programmable memory unit (7) with a stored processing program for processing the first resistance value (R1),
- wherein the processing program determines an output resistance value (AR) from the first resistance value (R1) according to an assignment rule, so that the output resistance value (AR) corresponds to the motor temperature value (T1) according to a resistance-temperature characteristic (KE) of a standardized sensor type (type E),
- and wherein the output resistance value (AR) can be communicated to the motor controller (9) for temperature-dependent control of the motor (2).

2. Motor feedback system (1) according to claim 1, **characterized in that** the assignment rule comprises a comparison of the first resistance value (R1) with resistance values of at least one look-up table stored in the memory unit (7).

3. Motor feedback system (1) according to claim 1, **characterized in that** the assignment rule comprises a conversion of the first resistance value (R1) by means of a corresponding polynomial.

4. Motor feedback system (1) according to claim 1, **characterized in that** the assignment rule informs the processing program about the specific sensor type (Type-I) of the motor temperature sensor (5) and determines the output resistance value (AR) on the basis of a comparison between the resistance-temperature characteristic curve (K1) of the specific sensor type (Type-I) and the resistance-temperature characteristic curve (KE) of the standardized sensor type (Type-E) as a function of the first resistance value (R1).

5. Motor feedback system (1) according to any of the preceding claims 1 to 4, **characterized in that** the assignment rule can be entered manually or automatically into the processing program.

6. A motor feedback system (1) for controlling an electric motor (2), comprising a motor temperature sensor (5) of a specific sensor type (Type-I) for detecting a first resistance value (R1) corresponding to a motor temperature value (T1) according to a resistance-temperature characteristic (K1) of the specific sensor type (Type-I),
- wherein the motor feedback system (1) comprises an encoder (6) and a motor controller (9), the encoder (6) detecting a rotation of a motor shaft (4) of the motor (2),
**characterized in that** the encoder (6) comprises a programmable memory unit (7) with a stored processing program for processing the first resistance value (R1),
- wherein resistance-temperature characteristics (K1, K2, KE) of different sensor types (type I, type E) are stored in the memory unit (7) and
- wherein the resistance-temperature characteristic curve (K1) corresponding to the specific sensor type (Type I) is automatically determined,
- wherein the processing program determines an output resistance value (AR) from the first resistance value (R1) via a resistance-temperature characteristic curve (KE) of a standardized sensor type (type E), so that the output resistance value (AR) corresponds to the motor temperature value (T1),
- and wherein the output resistance value (AR) can be communicated to the motor controller (9) for temperature-dependent control of the motor (2).

7. Motor feedback system (1) according to claim 6, **characterized in that** the encoder (6) comprises an integrated encoder temperature sensor (8) which generates a second resistance value (R2) representing an encoder temperature value (T2) in accordance with a resistance-temperature characteristic (K2) of the encoder temperature sensor (8).

8. Motor feedback system (1) according to claim 7, **characterized in that** when the motor feedback system (1) and the motor (2) are started, the processing program determines from the stored resistance-temperature characteristics (K1, KE) the resistance-temperature characteristic (K1) of the specific sensor type (type I) which uniquely has the first resistance value (R1) at the encoder temperature value (T2).

9. Motor feedback system (1) according to at least one of the preceding claims 1 to 8, **characterized in that** the motor temperature sensor (5) and the encoder temperature sensor (8) comprise a resistance temperature sensor, in particular a thermal resistor and accordingly a thermistor or a cold conductor sensor and accordingly a platinum sensor.

10. Motor feedback system (1) according to any of the preceding claims 1 to 9, **characterized in that** the first resistance value (R1) of the motor temperature sensor (5) is defined and stored as input parameter in the processing program.

11. Motor feedback system (1) according to at least one of the preceding claims 1 to 10, **characterized in that** the memory unit (7) comprises a volatile or nonvolatile data memory.

## Revendications

1. Système de rétroaction de moteur (1) pour commander un moteur électrique (2), comprenant un capteur de température de moteur (5) d'un type de capteur spécifique (Type-I) pour détecter une première valeur de résistance (R1) correspondant à une valeur de température de moteur (T1) selon une caractéristique résistance-température (K1) du type de capteur spécifique (Type-I),
- dans lequel le système de rétroaction du moteur (1) comprend un codeur (6) et un contrôleur de moteur (9), le codeur (6) détectant une rotation d'un arbre de moteur (4) du moteur (2),
**caractérisé en ce que** le codeur (6) comprend une unité de mémoire programmable (7) avec un programme de traitement mémorisé pour traiter la première valeur de résistance (R1),
- dans lequel le programme de traitement détermine une valeur de résistance de sortie (AR) à partir de la première valeur de résistance (R1) selon une règle d'affectation, de sorte que la valeur de résistance de sortie (AR) correspond à la valeur de température du moteur (T1) selon une caractéristique résistance-température (KE) d'un type de capteur normalisé (type E),
- et dans lequel la valeur de résistance de sortie (AR) peut être communiquée à la commande de moteur (9) pour la commande du moteur (2) en fonction de la température.

2. Système de rétroaction de moteur (1) selon la revendication 1, **caractérisé en ce que** la règle d'affectation comprend une comparaison de la première valeur de résistance (R1) avec des valeurs de résistance d'au moins une table de consultation mémorisée dans l'unité de mémoire (7).

3. Système de rétroaction pour moteur (1) selon la revendication 1, **caractérisé en ce que** la règle d'affectation comprend une conversion de la première valeur de résistance (R1) au moyen d'un polynôme correspondant.

4. Système de retour de moteur (1) selon la revendication 1, **caractérisé en ce que** la règle d'affectation informe le programme de traitement sur le type de capteur spécifique (Type-I) du capteur de température du moteur (5) et détermine la valeur de résistance de sortie (AR) sur la base d'une comparaison entre la courbe caractéristique résistance-température (K1) du type de capteur spécifique (Type-I) et la courbe caractéristique résistance-température (KE) du type de capteur normalisé (Type-E) en fonction de la première valeur de résistance (R1).

5. Système de retour de moteur (1) selon l'une des revendications précédentes 1 à 4, **caractérisé en ce que** la règle d'affectation peut être saisie manuellement ou automatiquement dans le programme de traitement.

6. Système de rétroaction de moteur (1) pour commander un moteur électrique (2), comprenant un capteur de température de moteur (5) d'un type de capteur spécifique (Type-I) pour détecter une première valeur de résistance (R1) correspondant à une valeur de température de moteur (T1) selon une caractéristique résistance-température (K1) du type de capteur spécifique (Type-I),
- dans lequel le système de rétroaction du moteur (1) comprend un codeur (6) et un contrôleur de moteur (9), le codeur (6) détectant une rotation d'un arbre de moteur (4) du moteur (2),
**caractérisé en ce que** le codeur (6) comprend une unité de mémoire programmable (7) avec un programme de traitement mémorisé pour traiter la première valeur de résistance (R1),
- dans lequel les caractéristiques résistance-température (K1, K2, KE) de différents types de capteurs (type I, type E) sont mémorisées dans l'unité de mémoire (7) et
- dans lequel la courbe caractéristique résistance-température (K1) correspondant au type de capteur spécifique (Type I) est déterminée automatiquement,
- dans lequel le programme de traitement détermine une valeur de résistance de sortie (AR) à partir de la première valeur de résistance (R1) par l'intermédiaire d'une courbe caractéristique résistance-température (KE) d'un type de capteur normalisé (type E), de sorte que la valeur de résistance de sortie (AR) correspond à la valeur de température du moteur (T1),
- et dans lequel la valeur de résistance de sortie (AR) peut être communiquée à la commande de moteur (9) pour la commande du moteur (2) en fonction de la température.

7. Système de rétroaction pour moteur (1) selon la revendication 6, **caractérisé en ce que** le codeur (6) comprend un capteur de température de codeur intégré (8) qui génère une deuxième valeur de résistance (R2) représentant une valeur de température de codeur (T2) selon une caractéristique résistance-température (K2) du capteur de température de codeur (8).

8. Système de rétroaction de moteur (1) selon la revendication 7, **caractérisé en ce que** lors du démarrage du système de rétroaction de moteur (1) et du moteur (2), le programme de traitement détermine à partir des caractéristiques résistance-température (K1, KE) mémorisées la caractéristique résistance-température (K1) du type de capteur spécifique (type I) qui présente de manière univoque la première valeur de résistance (R1) à la valeur de température du codeur (T2).

9. Système de rétroaction pour moteur (1) selon au moins l'une des revendications précédentes 1 à 8, **caractérisé en ce que** le capteur de température du moteur (5) et le capteur de température du codeur (8) comprennent un capteur de température à résistance, en particulier une résistance thermique et de manière correspondante une thermistance ou un capteur à conducteur froid et de manière correspondante un capteur en platine.

10. Système de retour de moteur (1) selon l'une des revendications précédentes 1 à 9, **caractérisé en ce que** la première valeur de résistance (R1) du capteur de température du moteur (5) est définie et mémorisée comme paramètre d'entrée dans le programme de traitement.

11. Système de retour de moteur (1) selon au moins une des revendications précédentes 1 à 10, **caractérisé en ce que** l'unité de mémoire (7) comprend une mémoire de données volatile ou non volatile.
